# EUROPÄISCHE PATENTSCHRIFT

(11) **EP 2 948 894 B1**
(45) Veröffentlichungstag und Bekanntmachung des Hinweises auf die Patenterteilung: **18.09.2019**
(21) Anmeldenummer: 13805291.5
(22) Anmeldetag: 26.11.2013
(51) Int. Cl.: G06F 21/78

(54) **VERFAHREN ZUM SICHEREN LÖSCHEN EINES NICHTFLÜCHTIGEN HALBLEITER-MASSENSPEICHERS, COMPUTERSYSTEM SOWIE COMPUTERPROGRAMMPRODUKT**
METHOD FOR SECURELY ERASING A NON-VOLATILE SEMICONDUCTOR MASS MEMORY, COMPUTER SYSTEM, AND COMPUTER PROGRAM PRODUCT
PROCÉDÉ D'EFFACEMENT SÛR D'UNE MÉMOIRE DE MASSE SEMI-CONDUCTRICE NON VOLATILE, SYSTÈME INFORMATIQUE ET PRODUIT-PROGRAMME D'ORDINATEUR

(30) Priorität: 28.01.2013 DE 102013100820
(43) Veröffentlichungstag der Anmeldung: 02.12.2015
(73) Patentinhaber: Fujitsu Technology Solutions Intellectual Property GmbH, 80807 München (DE)
(72) Erfinder: HÖHNKE, Thorsten, 86343 Königsbrunn (DE)
(74) Vertreter: Epping - Hermann - Fischer
(86) Internationale Anmeldenummer: PCT/EP2013/074776
(87) Internationale Veröffentlichungsnummer: WO 2014/114388

(56) Entgegenhaltungen:
- "Method And System for an Optimized Secure Erase of data on Non-Volatile Data Storage Devices", IP.COM JOURNAL, IP.COM INC., WEST HENRIETTA, NY, US, 15. März 2011 (2011-03-15), XP013144319, ISSN: 1533-0001
- Various: "DoD 5220.22-M-Sup 1", USA, 1. Februar 2002 (2002-02-01), XP055098639, Gefunden im Internet: URL:http://www.dtic.mil/whs/directives/cor res/pdf/522022MSup1.pdf [gefunden am 2014-01-27]
- Anonymous: "TRIM - Wikipedia, the free encyclopedia", , 15. Januar 2013 (2013-01-15), XP055098641, Gefunden im Internet: URL:http://web.archive.org/web/20130115104 138/http://en.wikipedia.org/wiki/TRIM [gefunden am 2014-01-27]

## Beschreibung

Die Erfindung betrifft ein Verfahren zum sicheren Löschen eines nichtflüchtigen Halbleiter-Massenspeichers mit einer Mehrzahl von physikalischen Speichereinheiten und einem Controller. Die Erfindung betrifft des Weiteren ein Computersystem sowie ein Computerprogrammprodukt.

Aus der IP.com Prior Art Database ist die anonyme technische Veröffentlichung mit der Nummer IPCOM000205100D vom 15. März 2011 bekannt, welche ein Verfahren und ein System für ein optimiertes, sicheres Löschen von Daten auf nicht-flüchtigen Speichergeräten betrifft. Dabei wird eine neue, optimierte und automatisierte Ergänzung zu einem existierenden TRIM Prozess vorgeschlagen, die innerhalb eines Speichergeräts selbst implementiert ist.

Aus dem Beiblatt DoD 5220.22-M-Sup 1 der Bedienungsanleitung des nationalen, industriellen Sicherheitsprogramms sind spezielle Sicherheitsmaßnahmen bekannt, um die Integrität von kritischen und sensiblen Daten wie speziellen Programmen sicherzustellen.

Aus dem Wikipedia Eintrag TRIM vom 15. Januar 2013 ist bekannt, dass "ein TRIM Befehl einem Betriebssystem ermöglicht, einem Solid-State Drive (SSD) mitzuteilen, welche Datenblöcke nicht länger benutzt und intern gelöscht werden können".

In der Regel weisen Computersysteme einen oder mehrere Massenspeicher zum Speichern von Daten auf. Beispielsweise beim Austausch eines solchen Massenspeichers stellt sich das Problem, dass dieser in der Regel private oder vertrauliche Daten enthält. Diese Daten sollen vor dem Austausch gelöscht werden, um einen Missbrauch der Daten zu verhindern. Dabei reicht in der Regel ein einfaches Löschen mittels des Betriebssystems nicht aus, die Daten unwiderruflich zu löschen, da lediglich auf Dateisystemebene die Zuordnung der Dateinamen zu physikalischen Speicheradressen des Massenspeichers gelöscht wird. Auf physikalischer Ebene verbleiben die Daten im Wesentlichen auf dem Massenspeicher. Meist genügen einfache Softwareprogramme, um diese vermeintlich gelöschten Daten wieder herzustellen.

Eine Erfolg versprechende Methode, diese Daten zu löschen, stellt das physische Zerstören des Massenspeichers dar, wobei beispielsweise der Massenspeicher entmagnetisiert oder anderweitig mechanisch zerstört wird. Solche Methoden bieten sich beispielsweise für Regierungen oder Geheimdienste an.

In der Regel werden allerdings die ausgetauschten Massenspeicher weiter benutzt, beispielsweise verkauft, wobei es notwendig ist, den Massenspeicher mittels des Computersystems sicher und unwiderruflich zu löschen. Im Falle von Magnetfestplattenlaufwerken existieren hierzu Löschalgorithmen, die die Speicherbereiche in der Regel mehrmals mit vorbestimmten Bitmustern überschreiben, sodass ein Wiederherstellen der ursprünglichen Daten praktisch unmöglich ist.

Solche Methoden sind allerdings bei nichtflüchtigen Halbleiter-Massenspeichern nicht anwendbar, da sich diese Massenspeicher technologiebedingt hinsichtlich der Organisation von Daten und freiem Speicherplatz grundsätzlich anders als Magnetfestplattenspeicher verhalten. Ein direkter Zugriff auf eine bestimmte Speicheradresse im physikalischen Speicherbereich ist bei einem Halbleiter-Massenspeicher im Gegensatz zu einem Magnetfestplattenspeicher in der Regel nicht möglich.

Aus der Veröffentlichung "Reliably Erasing Data From Flash-Based Solid State Drives" von Michael Wei et al. (2011) ist beispielsweise bekannt, dass existierende Löschmethoden für Magnetfestplattenlaufwerke bei Halbleiter-Massenspeichern wie Solid-State-Drives nicht effektiv anwendbar sind. Einzig spezifische Algorithmen für Controller der Halbleiter-Massenspeicher garantieren bei korrekter Implementierung das sichere Löschen des Halbleiter-Massenspeichers. Dies setzt allerdings Eingriffe in die Firmware des jeweiligen Controllers voraus. Zudem sind Firmwares je nach Hersteller des Halbleiter-Massenspeichers unterschiedlich.

Eine Aufgabe, die der vorliegenden Erfindung zugrunde liegt, ist es, ein einfaches Verfahren zum sicheren Löschen eines Halbleiter-Massenspeichers zu beschreiben. Es ist eine weitere Aufgabe der Erfindung, ein zur Durchführung des Verfahrens geeignetes Computersystem sowie ein Computerprogrammprodukt zu beschreiben.

Gemäß einem ersten Aspekt der Erfindung wird ein Verfahren zum sicheren Löschen eines nichtflüchtigen Halbleiter-Massenspeichers offenbart. Der Halbleiter-Massenspeicher weist eine Mehrzahl von physikalischen Speichereinheiten auf, die entweder einem über eine Schnittstelle des Halbleiter-Massenspeichers adressierbaren ersten Speicherbereich oder einem über die Schnittstelle nicht-adressierbaren zweiten Speicherbereich zugeordnet sind. Der Halbleiter-Massenspeicher weist des Weiteren einen Controller auf, der dazu eingerichtet ist, beim Erhalt eines Befehls zum Überschreiben von dem ersten Speicherbereich zugeordneten Speichereinheiten über die Schnittstelle die Zuordnung der Speichereinheiten zu dem ersten Speicherbereich und zweiten Speicherbereich gemäß einem Algorithmus zur Herstellung eines Abnutzungsausgleichs zu verändern. Das Verfahren weist die folgenden Schritte auf:
- Kennzeichnen des gesamten adressierbaren ersten Speicherbereichs zum Löschen, wobei der erste Speicherbereich mit einem metafilelosen Dateisystem formatiert wird;
- Aussenden eines Freigabebefehls von einem Betriebssystem oder einem BIOS über die Schnittstelle an den Controller, insbesondere eines TRIM-Befehls;
- Freigeben der dem ersten Speicherbereich zugeordneten physikalischen Speichereinheiten zum Beschreiben durch den Controller nach Empfang des Freigabebefehls;
- Aussenden wenigstens eines ersten Schreibbefehls von einem Betriebssystem oder einem BIOS über die Schnittstelle an den Controller zum Beschreiben des gesamten ersten Speicherbereichs mit Datenblöcken mit einem vorbestimmten ersten Bitmuster, wobei der gesamte erste Speicherbereich mit dem ersten Bitmuster überschrieben wird; und
- Aussenden wenigstens eines zweiten Schreibbefehls von einem Betriebssystem oder einem BIOS über die Schnittstelle an den Controller zum Überschreiben wenigstens eines vorbestimmten Teils der zuvor geschriebenen Datenblöcke mit einem zweiten, von dem ersten unterschiedlichen Bitmuster, wobei gemäß dem Algorithmus zur Herstellung eines Abnutzungsausgleichs die dem zweiten Speicherbereich zugeordneten physikalischen Speichereinheiten beschrieben werden.

Das Verfahren gemäß dem ersten Aspekt der Erfindung sieht vor, dass der gesamte physikalische Speicherbereich eines nichtflüchtigen Halbleiter-Massenspeichers gelöscht und mit einem vorbestimmten Bitmuster überschrieben wird. Dabei wird sowohl der über die Schnittstelle des Halbleiter-Massenspeichers adressierbare erste Speicherbereich als auch der über die Schnittstelle nicht-adressierbare zweite Speicherbereich gelöscht bzw. überschrieben. Somit ist ein Wiederherstellen der gelöschten Daten im Wesentlichen nicht möglich. Das Verfahren ist zudem unabhängig vom Hersteller des Halbleiter-Massenspeichers anwendbar und setzt keine Kenntnisse oder Eingriffe in die Firmware des Controllers des Halbleiter-Massenspeichers voraus.

Im Schritt des Kennzeichnens wird der Halbleiter-Massenspeicher mit einem vorbestimmten, metafilelosen Dateisystem formatiert. Gemäß einer weiteren vorteilhaften Ausgestaltung ist das metafilelose Dateisystem FAT16 oder FAT32. Dateisysteme mit Metadaten, beispielsweise NTFS, legen in einem speziellen Speicherbereich des Massenspeichers Metadaten an, in welchen Verwaltungsinformationen abgelegt werden. Beispielsweise werden Angaben zur Organisation des Speichermediums und zusätzliche Informationen zu den gespeicherten Daten wie Zugriffsrechte oder Informationen zu Orten, an welchen die Daten physikalisch gespeichert sind, gespeichert. Diese Metadaten sind in der Regel für einen Benutzer unzugänglich und können nicht ohne Weiteres gelöscht beziehungsweise überschrieben werden. Sie stellen ebenfalls ein Sicherheitsrisiko hinsichtlich der Wiederherstellung gelöschter privater oder vertraulicher Daten dar. Durch die Verwendung eines metafilelosen Dateisystems ist sichergestellt, dass der gesamte Speicherbereich gelöscht werden kann.

Optional werden in den Schritten des Aussendens des ersten Schreibbefehls und des zweiten Schreibbefehls Dateien mit einer Dateigröße geschrieben, die einem ganzzahligen Vielfachen der Größe eines Blocks oder eines Clusters des Dateisystems entsprechen. Dadurch ist es möglich, beim Schreiben von Dateien alle physikalischen Speichereinheiten des Halbleiter-Massenspeichers vollständig zu beschreiben.

Gemäß einer weiteren vorteilhaften Ausgestaltung der Erfindung umfassen die Dateien containerlose Dateien. Containerlose Dateien weisen in der Regel Inhalt auf, der entsprechend einer Codierung, beispielsweise ASCII, unverändert binär gespeichert wird. Beispielsweise beim Erstellen einer containerlosen Datei mittels eines Betriebssystems kann deren Inhalt und Größe somit exakt festgelegt werden. Dagegen enthält eine Containerdatei beispielsweise mehrere Dateien oder Dateiblöcke, welche sich hinsichtlich ihres Dateityps oder Dateiformats unterscheiden können. Zusätzlich weisen Containerdateien in der Regel automatisch generierte sogenannte "Header-Files", also Kopfdaten auf, die beispielsweise die innere Struktur der Containerdatei spezifizieren, beispielsweise die Anordnung der Dateien innerhalb der Containerdatei entsprechend ihrer Dateiformate. Die Größe und der Inhalt einer Containerdatei sind somit nicht exakt festlegbar.

Gemäß einer weiteren vorteilhaften Ausgestaltung der Erfindung umfasst das erste Bitmuster den Hexadezimalwert OxFF. Damit ist es möglich, den Speicherbereich des Halbleiter-Massenspeichers mit logischen Einsen zu beschreiben. Anhand eines mit logischen Einsen gefüllten Speicherbereichs ist eine Rekonstruktion gelöschter Dateien beziehungsweise Daten des Halbleiter-Massenspeichers praktisch nicht möglich.

Gemäß einem zweiten Aspekt der Erfindung wird ein Computersystem offenbart, welches ein BIOS, ein Betriebssystem und einen nichtflüchtigen Halbleiter-Massenspeicher mit einem Controller und einer Schnittstelle zum Zugriff auf einen ersten Speicherbereich des Halbleiter-Massenspeichers über den Controller aufweist. Die Schnittstelle ist dazu eingerichtet, Befehle von dem Betriebssystem oder dem BIOS (Basic Input Output System) zu erhalten und an den Controller zu übermitteln. Weiter ist das Computersystem dazu eingerichtet, ein Verfahren gemäß dem ersten Aspekt der Erfindung auszuführen.

Gemäß einem dritten Aspekt der Erfindung wird ein Computerprogrammprodukt offenbart, welches ausführbaren Programmcode umfasst, wobei beim Ausführen des Programmcodes durch eine Datenverarbeitungsvorrichtung, insbesondere einen Prozessor, ein Verfahren gemäß dem ersten Aspekt der Erfindung durchgeführt wird.

Das Computersystem gemäß dem zweiten Aspekt der Erfindung sowie das Computerprogrammprodukt gemäß dem dritten Aspekt der Erfindung weisen im Wesentlichen die vorgenannten Vorteile auf.

Weitere vorteilhafte Ausgestaltungen sind in der nachfolgenden ausführlichen Beschreibung eines Ausführungsbeispiels sowie den abhängigen Patentansprüchen offenbart.

Das Ausführungsbeispiel der Erfindung ist nachfolgend unter Bezugnahme auf die angehängten Figuren beschrieben.

In den Figuren zeigen:
- Figur 1: eine schematische Darstellung eines Computersystems mit einem nichtflüchtigen Halbleiter-Massenspeicher,
- Figur 2: ein Ablaufdiagramm eines Verfahrens zum sicheren Löschen des Halbleiter-Massenspeichers,
- Figur 3: eine erste schematische Darstellung von Speicherbereichen des Halbleiter-Massenspeichers und
- Figur 4: eine zweite schematische Darstellung von Speicherbereichen des Halbleiter-Massenspeichers.

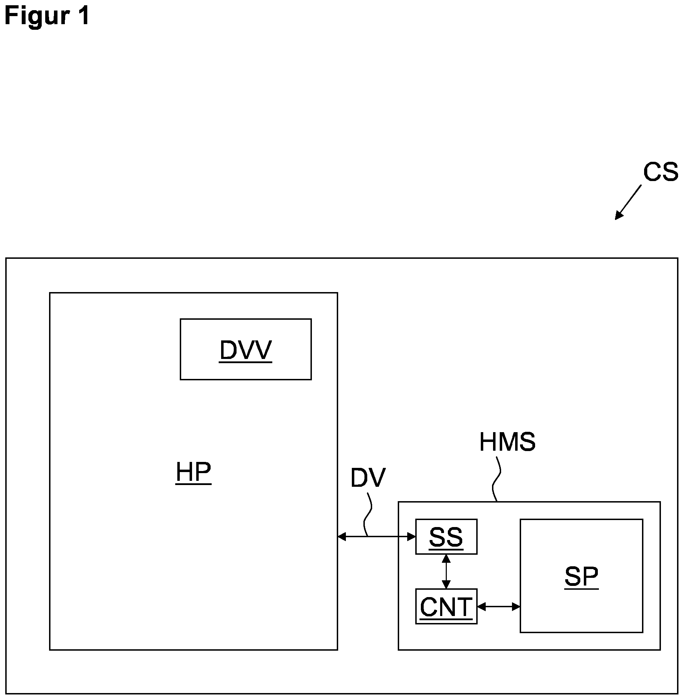

Figur 1 zeigt ein Computersystem CS, welches eine Hauptplatine HP aufweist. Die Hauptplatine HP weist eine Datenverarbeitungsvorrichtung DVV, beispielsweise einen Prozessor, auf. Über eine Datenverbindung DV, beispielsweise eine Busleitung, ist die Hauptplatine HP mit einem nichtflüchtigen Halbleiter-Massenspeicher HMS, beispielsweise einem sogenannten Solid-State-Drive, verbunden. Der Halbleiter-Massenspeicher HMS weist eine Schnittstelle SS auf, welche über die Datenverbindung DV mit einem Massenspeichercontroller auf der Hauptplatine HP verbunden ist. Weiter weist der Halbleiter-Massenspeicher HMS einen Speicher SP auf, welcher über einen Controller CNT mit der Schnittstelle SS verbunden ist. Der Speicher SP umfasst zum Beispiel einen oder mehrere Halbleiterspeicherbausteine, beispielsweise Flash-EEPROMs.

In der Figur 1 sind nur die für die Erläuterung der Erfindung relevanten Komponenten des Computersystems CS gezeigt. Auf weitere Komponenten wie beispielsweise Stromversorgungen für die Hauptplatine HP oder den Halbleiter-Massenspeicher HMS wurde wegen einer besseren Übersichtlichkeit verzichtet.

Als Datenverbindung DV zwischen der Hauptplatine HP und dem Halbleiter-Massenspeicher HMS kommen alle bekannten Verbindungsstandards in Frage, wie beispielsweise IDE-ATA (Integrated Disc Electronics-Advanced Technology Attachment), SATA (Serial Advanced Technology Attachment), SAS (Serial Attached Small Computer System Interface) oder FC (Fiber Channel).

Der Speicher SP des Halbleiter-Massenspeichers HMS basiert auf einer NAND-Speicherarchitektur. Der Speicher SP kann allerdings auch auf einer NOR-Speicherarchitektur basieren. NAND-Halbleiter-Massenspeicher weisen eine serielle Anordnung von Speicherzellen, insbesondere Transistoren, auf, die ähnlich einem NAND-Gatter verschaltet sind. Der Speicher SP besteht aus physikalischen Speichereinheiten, welche auch als "pages", also Seiten, oder auch Blöcke bezeichnet werden und eine Vielzahl von einzelnen Speicherzellen zusammenfassen. Üblicherweise besitzen die physikalischen Speichereinheiten eine Größe von 4096 Bytes bzw. 4 Kilobytes (KB). Diese physikalischen Speichereinheiten können einzeln von dem Controller CNT ausgelesen werden. Bei Schreib- bzw. Löschvorgängen werden die physikalischen Speichereinheiten in der Regel, insbesondere bei Flash-Speichern, allerdings zu sogenannten "Erasable Blocks", also Löschblöcken, zusammengefasst, welche beispielsweise 64 oder 128 einzelne physikalische Speichereinheiten umfassen. Beim Schreiben von Daten wird immer in freie physikalische Speichereinheiten eines Löschblocks geschrieben. Wird eine bereits beschriebene physikalische Speichereinheit eines Löschblocks geändert, beispielsweise durch Überschreiben von Daten, so wird der Inhalt der geänderten physikalische Speichereinheit in die nächste freie physikalische Speichereinheit des Löschblocks geschrieben. Die ursprünglich beschriebene physikalische Speichereinheit wird nicht gelöscht, sondern lediglich als "nicht-aktuell" markiert. Erst wenn alle physikalischen Speichereinheiten eines Löschblocks als "nicht-aktuell" markiert sind, wird der Löschblock im Ganzen gelöscht bzw. zum Überschreiben freigegeben.

Der Speicher SP ist weiter in einen über die Schnittstelle SS adressierbaren ersten Speicherbereich und einen über die Schnittstelle SS nicht-adressierbaren zweiten Speicherbereich unterteilt. Der erste Speicherbereich weist beispielsweise eine Größe von 128 GB auf. Der erste Speicherbereich wird auch als sichtbarer Speicherbereich und der zweite Speicherbereich als unsichtbarer Speicherbereich bezeichnet. Über die Schnittstelle SS wird ein logischer Speicherbereich bzw. logische Speichereinheiten eines Dateisystems adressiert, denen durch den Controller CNT physikalische Speichereinheiten des ersten Speicherbereichs zugeordnet werden. Ein direkter Zugriff auf physikalische Speichereinheiten des zweiten Speicherbereichs des Speichers SP ist über die Schnittstelle SS mittels standardisierten Protokollen nicht möglich. Der zweite Speicherbereich enthält zum Beispiel zum Löschen freigegebene Speichereinheiten.

Der Controller CNT des Halbleiter-Massenspeichers HMS ist dazu eingerichtet, beim Erhalt eines Befehls über die Schnittstelle SS zum Be- oder Überschreiben von dem ersten Speicherbereich zugeordneten physikalischen Speichereinheiten die Zuordnung der physikalischen Speichereinheiten zu dem ersten Speicherbereich und dem zweiten Speicherbereich gemäß einem Algorithmus zur Herstellung eines Abnutzungsausgleichs der Speichereinheiten zu verändern. Dies wird als sogenanntes "Wear Leveling" bezeichnet. Dabei wird zwischen statischem und dynamischen Wear Leveling unterschieden.

Soll ein Löschblock beschrieben werden, so beschreibt der Controller CNT beim dynamischen Wear Leveling stets die Löschblöcke des ersten Speicherbereichs oder des zweiten Speicherbereichs, welche nicht bereits beschrieben sind und am wenigsten häufig beschrieben bzw. abgenutzt wurden. In der Regel wird eine Anzahl der Schreibvorgänge und damit die Abnutzung eines Löschblocks von dem Controller CNT gespeichert. Wird dabei ein Löschblock des zweiten Speicherbereichs beschrieben, so wird dieser Löschblock anstelle eines nicht benutzten Löschblocks des ersten Speicherbereichs dem ersten Speicherbereich zugeordnet.

Beim statischen Wear Leveling wird nicht nur die Abnutzung nicht-beschriebener Löschblöcke für den Abnutzungsausgleich berücksichtigt, sondern auch die Abnutzung bereits zumindest teilweise beschriebener Löschblöcke. Soll ein Löschblock beschrieben werden, so wird der am wenigsten abgenutzte Löschblock ausgewählt. Ist dieser Löschblock zumindest teilweise beschrieben, so werden die Daten des beschriebenen Löschblocks in physikalische Speichereinheiten eines anderen Löschblocks kopiert, sodass der wenig beschriebene Löschblock für den Schreibvorgang freigegeben ist. Somit garantiert der Controller CNT des Halbleiter-Massenspeichers HMS, dass eine gleichmäßige Abnutzung aller physikalischen Speichereinheiten bzw. Löschblöcken des Halbleiter-Massenspeichers HMS gewährleistet ist.

Aufgrund des Wear Levelings ist es beispielsweise nicht möglich, den gesamten Speicherbereich des Halbleiter-Massenspeichers HMS, insbesondere den zweiten Speicherbereich, gezielt über ein Betriebssystem oder BIOS mit herkömmlichen, beispielsweise bei Magnetfestplattenlaufwerken verwendeten Methoden zu löschen und/oder zu überschreiben.

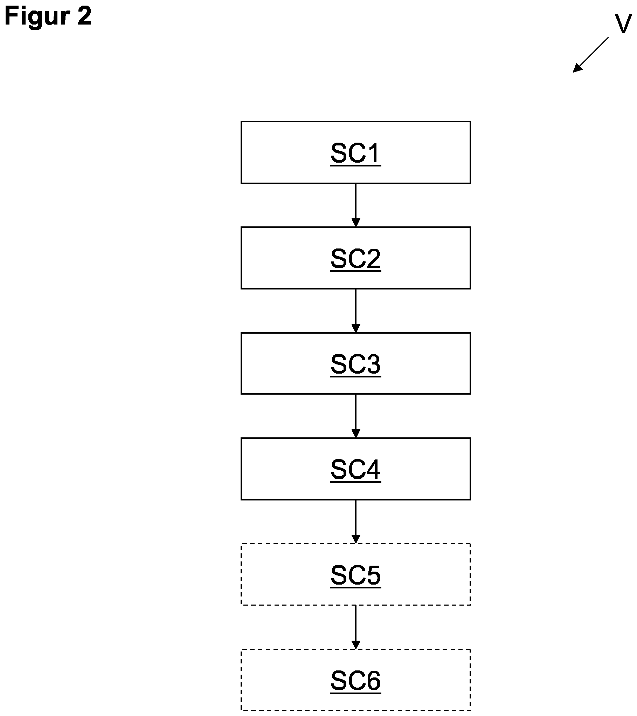

Das Computersystem CS ist dazu eingerichtet, ein Verfahren zum sicheren Löschen des Halbleiter-Massenspeichers HMS auszuführen. Das Verfahren wird nachfolgend anhand der Figuren 2, 3 und 4 beschrieben.

Figur 2 zeigt ein Ablaufdiagramm für ein Verfahren V, welches von einem Computersystem CS gemäß Figur 1 ausgeführt werden kann. Beispielsweise führt die Datenverarbeitungsvorrichtung DVV Programmcode aus, durch welchen das Verfahren V durchgeführt wird.

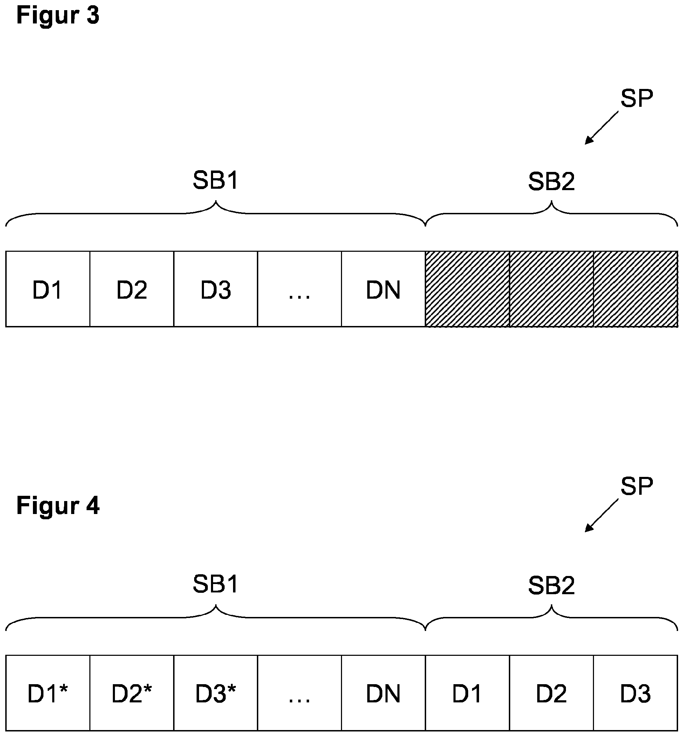

Figuren 3 und 4 zeigen schematisch den Speicher SP des Halbleiter-Massenspeichers HMS gemäß der Figur 1. Der Speicher SP weist wie oben beschrieben einen ersten Speicherbereich SB1, der auch als sichtbarer Speicherbereich bezeichnet wird, sowie einen zweiten Speicherbereich SB2, der auch als unsichtbarer Speicherbereich bezeichnet wird, auf.

Im anhand der Figuren 1 bis 4 beschriebenen Ausführungsbeispiel werden Befehle über die Schnittstelle SS an den Controller mittels eines Betriebssystems des Computersystems CS ausgesendet. Alternativ können die Befehle auch über ein BIOS oder ein Anwendungsprogramm ausgesendet werden.

In einem ersten Schritt SC1 des Verfahrens V wird der gesamte adressierbare erste Speicherbereichs (SB1) zum Löschen gekennzeichnet. Beispielsweise wird der erste Speicherbereich SB1 mit einem metafilelosen Dateisystem formatiert. Für die Art und Weise, wie das Dateisystem strukturiert ist, können unterschiedliche Spezifikationen eingesetzt werden. Beispielsweise sind solche Spezifikationen FAT16 oder FAT32 für Microsoft DOS- bzw. Windows-basierte Betriebssysteme. Im dargestellten Ausführungsbeispiel wird das Dateisystem FAT32 verwendet, welches eine Clustergröße von 4 KB aufweist. Es sind auch andere Clustergrößen wie beispielsweise 2KB oder 16KB denkbar. Einem Cluster der Größe 4 KB ist demnach 1 physikalische Speichereinheit zugewiesen. Dateien, die auf dem Halbleiter-Massenspeicher HMS gespeichert werden, belegen immer eine ganzzahlige Vielzahl von Clustern, auch wenn deren tatsächliche Größe nicht einem Vielfachen der Clustergröße entspricht.

Beim Formatieren wird der logische Speicherbereich auf Betriebssystemsebene gelöscht. Dabei erhält der Controller CNT des Halbleiter-Massenspeichers HMS die Information zum Löschen über die Schnittstelle SS und vermerkt die dem logischen Speicherbereich zugeordneten physikalischen Speichereinheiten als "ungültig" oder "nicht-aktuell". Allerdings werden die dem logischen Speicherbereich zugeordneten physikalischen Speichereinheiten des ersten Speicherbereichs SB1 zunächst nicht sicher gelöscht. Dies hat beispielsweise zur Folge, dass gemäß dem Wear Leveling, insbesondere dem statischen Wear Leveling, Daten "ungültig" markierter physikalischer Speichereinheiten in andere Löschblöcke kopiert werden, obwohl diese Daten nicht mehr benötigt werden.

In einem nächsten Schritt SC2 wird daher über die Schnittstelle SS an den Controller CNT ein Freigabebefehl, insbesondere ein ATA-TRIM-Befehl, ausgesandt. Dabei wird dem Controller CNT über Schnittstelle SS durch das Betriebssystem mitgeteilt, dass im logischen Speicherbereich gelöschte oder anderweitig freigewordene physikalische Speichereinheiten nicht mehr benutzt werden und/oder die Daten dieser physikalischen Speichereinheiten obsolet sind. Sind sämtliche physikalische Speichereinheiten eines Löschblocks nicht mehr benutzt, so kann der Löschblock durch den Controller CNT zum Beschreiben freigegeben und/oder gelöscht werden. Dadurch, dass in dem Schritt SC1 der gesamte logische Speicherbereich formatiert worden ist, wird dem Controller CNT im Schritt SC2 mitgeteilt, dass sämtliche, "nicht-aktuelle" physikalische Speichereinheiten des ersten Speicherbereichs SB1 freigegeben werden und/oder gelöscht werden können. Dies hat beispielsweise zur Folge, dass diese Daten aufgrund des Wear Levelings nicht mehr in freie Löschblöcke kopiert werden.

In einem nächsten Schritt SC3 wird über die Schnittstelle SS wenigstens ein erster Schreibbefehl an den Controller CNT zum Beschreiben des gesamten ersten Speicherbereichs SB1 mit Datenblöcken mit einem vorbestimmten ersten Bitmuster ausgesandt. Bei den Datenblöcken handelt es sich um Daten containerloser Dateien D1 bis DN (siehe Figur 3), beispielsweise Textdateien, welche beispielsweise direkt über Aufrufe eines Betriebssystems erstellt worden sind und eine Folge des Hexadezimalwerts 0xFF enthalten. Der Hexadezimalwert 0xFF entspricht dem Binärcode 11111111, also einem Byte, in dem alle Bits gesetzt sind. Im Ausführungsbeispiel weisen die Dateien D1 bis DN jeweils eine Größe eines Löschblocks des Dateisystems, also zum Beispiel 256 KB, auf. Beim Schreiben der Dateien D1 bis DN werden entsprechend des Wear Levelings durch den Controller dabei die am wenigsten abgenutzten Löschblöcke ausgewählt und deren physikalischen Speichereinheiten beschrieben. Werden hierbei im Schritt SC2 physikalische Speichereinheiten freigegebener Löschblöcke ausgewählt, die noch nicht gelöscht sind, werden diese vor dem Beschreiben gelöscht. Die im Schritt SC3 beschriebenen Löschblöcke werden dabei dem ersten Speicherbereich SB1 zugeordnet.

Im Schritt SC3 werden so viele Dateien geschrieben, dass der gesamte erste, über die Schnittstelle SS adressierbare Speicherbereich SB1 mit logischen Einsen beschrieben ist. Eine Datei mit einer Größe abweichend eines Vielfachen der Größe eines Clusters bzw. Löschblocks könnte dazu führen, dass nicht sämtliche physikalische Speichereinheiten des ersten Speicherbereichs SB1 beschrieben werden.

In einem nächsten Schritt SC4 wird nun über die Schnittstelle SS an den Controller CNT wenigstens ein zweiter Schreibbefehl zum Überschreiben wenigstens eines vorbestimmten Teils der zuvor geschriebenen Datenblöcke mit einem zweiten, von dem ersten unterschiedlichen Bitmuster ausgesandt. Dabei wird ein Teil der zuvor in Schritt SC3 geschriebenen Dateien mit geänderten Dateien überschrieben.

Der Teil der zuvor geschriebenen Dateien wird mit Dateien mit einem zweiten Bitmuster überschrieben, wobei das zweite Bitmuster im Vergleich zu dem ersten Bitmuster verändert ist. Dabei reicht eine lediglich kleine Veränderung aus, beispielsweise die Veränderung eines der Mehrzahl von Hexadezimalwerten 0xFF einer Datei in den Hexadezimalwert 0xFE bzw. den Binärcode 11111110. Dies bedeutet, dass beispielsweise 1 Bit einer Datei verändert werden muss. Beim Überschreiben der Dateien werden nun entsprechend des oben beschriebenen Wear Levelings nicht die physikalischen Speichereinheiten von Löschblöcken der zu überschreibenden Dateien des ersten Speicherbereichs SB1 überschrieben. Stattdessen werden die neuen Dateien in physikalische Speichereinheiten von Löschblöcken des zweiten Speicherbereichs SB2 geschrieben, da dieser Speicherbereich die einzig freien bzw. zum Überschreiben freigegebenen Löschblöcke aufweist. Die physikalischen Speichereinheiten bzw. Löschblöcke mit den Daten der geänderten Dateien werden dem ersten Speicherbereich SB1 zugeordnet. Die ursprünglichen physikalischen Speichereinheiten bzw. Löschblöcke des ersten Speicherbereichs SB1 mit dem ersten Bitmuster werden von dem Controller CNT nun dem zweiten Speicherbereich SB2 zugeordnet.

Das Aussenden des wenigstens einen zweiten Schreibbefehls über die Schnittstelle SS an den Controller CNT wird am Beispiel des Überschreibens der Datei D1 anhand der Figuren 3 und 4 demonstriert. Hierbei ist der gesamte Speicherbereich SB1 gemäß Figur 3 bereits mit den Dateien D1 bis DN mit einem vorbestimmten ersten Bitmuster beschrieben. Die Dateien D1 bis DN weisen dabei jeweils die Größe eines Löschblocks, beispielsweise 16 KB auf. Erhält der Controller CNT nun den Befehl, dass die der Datei D1 zugrundeliegenden physikalischen Speichereinheiten des Löschblocks mit Daten einer geänderten, gleichgroßen Datei D1* überschrieben werden sollen, so wird der Inhalt der neuen Datei D1* in physikalische Speichereinheiten eines Löschblocks geschrieben, der bisher dem zweiten Speicherbereich SB2 zugeordnet war. Der Löschblock der ursprünglichen Datei D1 wird dabei dem zweiten Speicherbereich SB2 zugeordnet, wobei der Löschblock der neuen Datei D1* nun dem ersten Speicherbereich SB1 zugeordnet wird (siehe Figur 4). Analog sind gemäß Figur 4 die Dateien D2 und D3 mit geänderten Dateien D2* und D3* überschrieben worden.

Die Dateien können alternativ auch eine andere Größe aufweisen. Vorraussetzung ist, dass die Größe der Dateien einem Vielfachen der Größe eines Clusters und eines Löschblocks des Dateisystems entspricht. Beim Überschreiben der Dateien gemäß dem Schritt SC4 mit geänderten Dateien werden gemäß dem Wear Leveling in der Regel alle Daten der geänderten Dateien in den zweiten Speicherbereich SB2 geschrieben, auch wenn die Änderung der Datei selbst nur Daten einer physikalische Speichereinheit betrifft. Beispielsweise würde abhängig vom Wear Leveling Algorithmus beim Überschreiben einer bereits geschriebenen Datei der Größe zweier Löschblöcke mit einer geänderten, gleichgroßen Datei, bei der lediglich ein Bit im Vergleich zur bereits geschriebenen Datei verändert ist, die geänderte Datei vollständig in zwei Löschblöcke des zweiten Speicherbereichs SB2 geschrieben werden, welche dann anstelle der ursprünglichen Löschblöcke der überschriebenen Datei dem ersten Speicherbereich SB1 zugeordnet werden.

Bei dem Verfahren V werden mindestens so viele Dateien geändert bzw. überschrieben, dass der gesamte zweite, unsichtbare, Speicherbereich SB2 beschrieben wird.

Je nach Hersteller des Halbleiter-Massenspeichers HMS kann der unsichtbare, zweite Speicherbereich SB2 zirka 6 bis 15 % der Größe des ersten Speicherbereichs SB1 betragen. Somit ist nach einem Überschreiben von zum Beispiel mehr als 15% des ersten Speicherbereichs SB1 sichergestellt, dass der gesamte zweite Speicherbereich SB2 nur noch nutzlose Daten erhält. Alternativ können auch deutlich mehr Dateien geändert bzw. überschrieben werden. Auch können die Dateien, welche das zweite Bitmuster aufweisen, auch wieder mit Dateien mit einem neuerlich veränderten Bitmuster, beispielsweise wieder dem ersten Bitmuster, überschrieben werden. Dadurch wird die Sicherheit erhöht, dass sämtliche physikalische Speichereinheiten des Halbleiter-Massenspeichers unwiderruflich gelöscht bzw. überschrieben werden.

Um die Sicherheit weiter zu erhöhen, dass gelöschte Daten eines Halbleiter-Massenspeichers nicht wiederhergestellt werden können, kann das Verfahren V auch mehrmals, beispielsweise zwei- oder dreimal hintereinander durchgeführt werden.

Somit ist nun der gesamte physikalische Speicherbereich des Halbleiter-Massenspeichers HMS beschrieben und eine Rekonstruktion der zuvor darauf gespeicherten Daten mit vertretbarem Aufwand nicht mehr möglich. Somit ist es auf einfache Weise möglich, herstellerunabhängig einen nichtflüchtigen Halbleiter-Massenspeicher zu löschen. Dies kann wie beschrieben mittels des Betriebssystems oder auch mittels des BIOS geschehen. Es ist daher nicht nötig, in die herstellerabhängige Firmware des Halbleiter-Massenspeichers HMS einzugreifen beziehungsweise direkt auf den Controller CNT des Halbleiter-Massenspeichers HMS zuzugreifen.

Technologiebedingt müssen defekte Speichereinheiten beziehungsweise Speicherzellen eines Halbleiter-Massenspeichers für das sichere Löschen nicht betrachtet werden, da sie in der Regel aufgrund defekter Floating-Gates der Transistoren keine gültigen Informationen mehr enthalten.

Zusätzlich kann das Verfahren V in einer weiteren Ausführungsform einen in Figur 2 gestrichelt dargestellten fünften Schritt SC5 aufweisen, wonach erneut der ATA-TRIM-Befehl ausgeführt wird. Zusätzlich kann in einem ebenfalls in Figur 2 gestrichelt dargestellten sechsten Schritt SC6 der Halbleiter-Massenspeicher HMS mit einem vorbestimmten Dateisystem formatiert werden. Dies kann beispielsweise auch ein Dateisystem mit Metainformationen, wie beispielsweise NTFS, sein. Damit ist der Halbleiter-Massenspeicher HMS für eine weitere Benutzung vorbereitet. Bevorzugt wird der Halbleiter-Massenspeicher HMS mit demselben Dateisystem formatiert, das vor Ausführung des Verfahrens V verwendet wurde.

### Bezugszeichenliste

- CNT: Controller
- CS: Computersystem
- D1 bis DN: Datei
- D1* bis D3*: Datei
- DV: Datenverbindung
- DVV: Datenverarbeitungsvorrichtung
- HMS: Halbleiter-Massenspeicher
- HP: Hauptplatine
- SB1: Speicherbereich
- SB2: Speicherbereich
- SC1 bis SC6: Schritte
- SP: Speicher
- SS: Schnittstelle
- V: Verfahren

## Patentansprüche

1. Verfahren (V) zum sicheren Löschen eines nichtflüchtigen Halbleiter-Massenspeichers (HMS) mit einer Mehrzahl von physikalischen Speichereinheiten, die entweder einem über eine Schnittstelle (SS) des Halbleiter-Massenspeichers (HMS) adressierbaren ersten Speicherbereich (SB1) oder einem über die Schnittstelle (SS) nicht-adressierbaren zweiten Speicherbereich (SB2) zugeordnet sind, und einen Controller (CNT), der dazu eingerichtet ist, beim Erhalt eines Befehls zum Überschreiben von dem ersten Speicherbereich (SB1) zugeordneten Speichereinheiten über die Schnittstelle (SS) die Zuordnung der Speichereinheiten zu dem ersten Speicherbereich (SB1) und zweiten Speicherbereich (SB2) gemäß einem Algorithmus zur Herstellung eines Abnutzungsausgleichs zu verändern, mit den Schritten:
- Kennzeichnen des gesamten adressierbaren ersten Speicherbereichs (SB1) zum Löschen, wobei der erste Speicherbereich (SB1) mit einem metafilelosen Dateisystem formatiert wird;
- Aussenden eines Freigabebefehls von einem Betriebssystem oder einem BIOS über die Schnittstelle (SS) an den Controller (CNT);
- Freigeben der dem ersten Speicherbereich (SB1) zugeordneten physikalischen Speichereinheiten zum Beschreiben durch den Controller (CNT) nach Empfang des Freigabebefehls;
- Aussenden wenigstens eines ersten Schreibbefehls von dem Betriebssystem oder dem BIOS über die Schnittstelle (SS) an den Controller (CNT) zum Beschreiben des gesamten ersten Speicherbereichs (SB1) mit Datenblöcken mit einem vorbestimmten ersten Bitmuster, wobei der gesamte erste Speicherbereich (SB1) mit dem ersten Bitmuster überschrieben wird; und
- Aussenden wenigstens eines zweiten Schreibbefehls von dem Betriebssystem oder dem BIOS über die Schnittstelle (SS) an den Controller (CNT) zum Überschreiben wenigstens eines vorbestimmten Teils der zuvor geschriebenen Datenblöcke mit einem zweiten, von dem ersten unterschiedlichen Bitmuster, wobei gemäß dem Algorithmus zur Herstellung eines Abnutzungsausgleichs die dem zweiten Speicherbereich (SB2) zugeordneten physikalischen Speichereinheiten beschrieben werden.

2. Verfahren (V) nach Anspruch 1, wobei
in den Schritten des Aussendens des ersten Schreibbefehls und des zweiten Schreibbefehls Dateien mit einer Dateigröße, die einem ganzzahligen Vielfachen der Größe eines Blocks und/oder Clusters des Dateisystems entsprechen, geschrieben werden.

3. Verfahren (V) nach Anspruch 2,
bei welchem die Dateien containerlose Dateien (D1 bis DN, D1* bis D3*) umfassen.

4. Verfahren (V) nach einem der Ansprüche 1 bis 3,
bei welchem das metafileloses Dateisystem FAT16 oder FAT32 ist.

5. Verfahren (V) nach einem der Ansprüche 1 bis 4,
bei welchem das erste Bitmuster den Hexadezimalwert OxFF umfasst.

6. Computersystem (CS), aufweisend
ein BIOS, ein Betriebssystem und einen nichtflüchtigen Halbleiter-Massenspeicher (HMS) mit einem Controller (CNT) und einer Schnittstelle (SS) zum Zugriff auf einen ersten Speicherbereich (SB1) des Halbleiter-Massenspeichers (HMS) über den Controller (CNT), wobei
- die Schnittstelle (SS) dazu eingerichtet ist, Befehle von dem Betriebssystem oder dem BIOS zu erhalten und an den Controller (CNT) zu übermitteln; und
- das Computersystem (CS) dazu eingerichtet ist, ein Verfahren (V) nach einem der Ansprüche 1 bis 5 auszuführen.

7. Datenträger, auf denen ein maschinenlesbares Computerprogramm gespeichert ist, das ein Verfahren nach einem der Ansprüche 1 bis 5 ausführt, wenn es auf einem Computer abgearbeitet wird.

## Claims

1. Method (V) for securely erasing a non-volatile semiconductor mass memory (HMS) with a plurality of physical memory units, which are assigned to either a first memory area (SB1) addressable via an interface (SS) of the semiconductor mass memory (HMS), or a second memory area (SB2) non-addressable via the interface (SS), and a controller (CNT), which is configured, upon receipt of a command to overwrite memory units assigned to the first memory area (SB1), via the interface (SS), to alter the assignment of the memory units to the first memory area (SB1) and the second memory area (SB2) according to an algorithm to produce a wear comparison, comprising the steps:
- designation of the entire addressable first memory area (SB1) for erasure, wherein the first memory area (SB1) is formatted with a metafile-less file system;
- sending out of a release command from an operating system or a BIOS, via the interface (SS), to the controller (CNT);
- releasing the physical memory units, assigned to the first memory area (SB1), for being written on by the controller (CNT), after receipt of the release command;
- sending out at least one write command by the operating system or the BIOS, via the interface (SS), to the controller (CNT), for writing on the entire first memory area (SB1) with data blocks with a predetermined first bit pattern, wherein the entire first memory area (SB1) is overwritten with the first bit pattern; and
- sending out at least one second write command by the operating system or the BIOS, via the interface (SS), to the controller (CNT), to overwrite at least one predetermined part of the previously written data blocks with a second bit pattern, different from the first bit pattern, wherein, according to the algorithm for producing a wear comparison, the physical memory units assigned to the second memory area (SB2) are written on.

2. Method (V) according to claim 1, wherein
files with a file size which corresponds to an integral multiple of the size of a block and/or cluster of the file system are written in the steps of sending out the first write command and sending out the second write command.

3. Method (V) according to claim 2,
in which the files include containerless files (D1 to DN, D1* to D3*).

4. Method (V) according to one of claims 1 to 3,
in which the metafile-free file system is FAT16 or FAT32.

5. Method (V) according to one of claims 1 to 4,
in which the first bit pattern includes the hexadecimal value 0xFF.

6. Computer system (CS), comprising
a BIOS, an operating system and a non-volatile semiconductor mass memory (HMS) with a controller (CNT) and an interface (SS) for access to a first memory area (SB1) of the semiconductor mass memory (HMS) via the controller (CNT), wherein
- the interface (SS) is configured to receive commands from the operating system or the BIOS and to transmit these commands to the controller (CNT); and
- the computer system (CS) is configured to execute a method (V) according to one of claims 1 to 5.

7. Data carrier, on which a machine-readable computer program is stored, which program executes a method according of one of claims 1 to 5, if it is executed on a computer.

## Revendications

1. Procédé (V) de suppression fiable d'une mémoire de masse semi-conductrice non volatile (HMS) avec une multitude d'unités de mémoire physiques, qui sont allouées soit à une première zone de mémoire (SB1) pouvant être adressée par l'intermédiaire d'une interface (SS) de la mémoire de masse semi-conductrice (HMS) soit à une deuxième zone de mémoire (SB2) ne pouvant pas être adressée par l'intermédiaire de l'interface (SS), et un contrôleur (CNT), qui est configuré pour modifier, à réception d'une instruction pour écraser des unités de mémoire allouées à la première zone de mémoire (SB1), par l'intermédiaire de l'interface (SS), l'allocation des unités de mémoire à la première zone de mémoire (SB1) et à la deuxième zone de mémoire (SB2) selon un algorithme servant à établir une comparaison d'usure, avec les étapes :
- de désignation de l'ensemble de la première zone de mémoire (SB1) pouvant être adressée aux fins de la suppression, dans lequel la première zone de mémoire (SB1) est formatée avec un système de fichiers sans métafichier ;
- d'envoi d'une instruction de libération depuis un système d'exploitation ou d'un BIOS au contrôleur (CNT) par l'intermédiaire de l'interface (SS) ;
- de libération des unités de mémoire physiques allouées à la première zone de mémoire (SB1) aux fins de l'écriture par le contrôleur (CNT) à réception de l'instruction de libération ;
- d'envoi d'au moins une première instruction d'écriture depuis le système d'exploitation ou le BIOS au contrôleur (CNT) par l'intermédiaire de l'interface (SS) aux fins de l'écrite de l'ensemble de la première zone de mémoire (SB1) avec des blocs de données avec un premier configuration binaire prédéfinie, dans lequel l'ensemble de la première zone de mémoire (SB1) est écrasé avec le premier configuration binaire ; et
- d'envoi d'au moins une deuxième instruction d'écriture par le système d'exploitation ou le BIOS au contrôleur (CNT) par l'intermédiaire de l'interface (SS) aux fins de l'écrasement d'au moins une partie prédéfinie des blocs de données écrits au préalable avec un deuxième configuration binaire différent du premier, dans lequel les unités de mémoire physiques allouées à la deuxième zone de mémoire (SB2) sont écrites selon l'algorithme servant à établir une comparaison d'usure.

2. Procédé (V) selon la revendication 1, dans lequel
lors des étapes de l'envoi de la première instruction d'écriture et de la deuxième instruction d'écriture, des fichiers avec une taille de fichier, qui correspond à un multiple entier de la taille d'un bloc et/ou d'un cluster du système de fichiers, sont écrits.

3. Procédé (V) selon la revendication 2,
où les fichiers comprennent des fichiers sans conteneur (D1 à DN, D1* à D3*).

4. Procédé (V) selon l'une quelconque des revendications 1 à 3,
où le système de fichiers sans métafichier est un système FAT16 ou FAT32.

5. Procédé (V) selon l'une quelconque des revendications 1 à 4,
où la première configuration binaire comprend la valeur hexadécimale 0xFF.

6. Système informatique (CS), présentant
un BIOS, un système d'exploitation et une mémoire de masse semi-conductrice non volatile (HMS) avec un contrôleur (CNT) et une interface (SS) servant à accéder à une première zone de mémoire (SB1) de la mémoire de masse semi-conductrice (HMS) par l'intermédiaire du contrôleur (CNT), dans lequel
- l'interface (SS) est configurée pour recevoir des instructions depuis le système d'exploitation ou le BIOS et les transmettre au contrôleur (CNT) ; et
- le système informatique (CS) est configuré pour exécuter un procédé (V) selon l'une quelconque des revendications 1 à 5.

7. Supports de données, sur lesquels un programme informatique lisible par une machine est mémorisé, qui exécute un procédé selon l'une quelconque des revendications 1 à 5 quand il est exécuté sur un ordinateur.
